# EUROPEAN PATENT SPECIFICATION

(11) **EP 3 626 373 B1**
(45) Date of publication and mention of the grant of the patent: **12.01.2022**
(21) Application number: 19206749.4
(22) Date of filing: 13.08.2015
(51) Int. Cl.: B23D 49/16, B23D 51/04, B23D 49/00, B27B 11/10

(54) **RECIPROCAL SAW WITH CLAMP AND METHODS OF USE**
STICHSÄGE MIT KLEMME UND VERFAHREN ZUR VERWENDUNG
SCIE ALTERNATIVE AVEC BLOCAGE ET PROCÉDÉS D'UTILISATION

(43) Date of publication of application: 25.03.2020
(62) Divisional of application: 15180856.5
(73) Proprietor: Techtronic Outdoor Products Technology Limited, Hamilton HM12 (BM)
(72) Inventor: Lau, Ka Chun, Kwai Chung, New Territories (HK)
(74) Representative: Novagraaf Group

(56) References cited:
- EP-A2- 0 856 372
- CN-A- 103 537 758
- CN-A- 103 895 068
- CN-U- 203 109 348
- DE-U1- 8 507 971

## Description

### FIELD OF THE INVENTION

The present invention relates to a reciprocal saw having a clamp and methods of use therefor. More specifically, the present invention relates to a reciprocal saw according to the preamble of claim 1 and having a clamp for holding an item to be cut and methods of use therefor.

### BACKGROUND

Reciprocal saws exist for the purpose of cutting items such as wood, branches, piping, etc. In some cases the item to be cut has a round or tubular shape which can make it difficult to start cutting and/or to cut the item without it moving, rolling, etc. Accordingly, the user may have to hold the reciprocal saw with one hand while holding the item with the other hand. Such a position can lead to a loss of balance, slippage, etc.

As a result, various clamps have been produced which hold an item to be cut while the reciprocal saw cuts through it. However, such existing clamps tend to either still require the use of the other hand, or utilize a spring-loaded lever which must be then depressed by the user' s thumb, or other finger in order to open so as to accept and hold the item to be cut. Such methods require special coordination and effort. CN 103 537758 A discloses a reciprocal saw according to the preamble of claim 1, with a clamping device used for clamping a workpiece, wherein the clamping device comprises a connecting piece movably connected with the shell body and a locking piece movable between a first clamping position and a second non-clamping position.

Accordingly, the need remains for a clamp which may be used without the need for an additional hand, or by triggering it with a finger or thumb. The need also remains for an intuitive and instinctive method for inserting an item to be cut into a clamp.

### SUMMARY OF THE INVENTION

According to the invention, a reciprocal saw defined by the features of claim 1 is provided and comprises a handle, a cutting blade distal from the handle and a chassis between the handle and the cutting blade. The chassis has a receiving area thereupon, and the receiving area may receive the item. A clamp is attached to the chassis proximal to the cutting blade. The clamp has an open position and a closed position and a pivot. A clamp jaw is distal from the pivot. When in the closed position, the clamp jaw is immediately adjacent to the receiving area, forms part of the indentation, and when in the open position the clamp jaw is not immediately adjacent to the receiving area. When the reciprocal saw is moved, then the item may be held by the clamp.

Another aspect of the present invention defines a method for holding an item according to Claim 13 by providing a reciprocal saw as described above with the clamp in the closed position, placing an item into the receiving area, and moving the reciprocal saw such that the item pulls the clamp jaw into the open position such that the clamp jaw holds the item.

Finally, a further aspect of the present invention defines a method of cutting an item according to Claim 14 by providing a reciprocal saw according to any of the claims 1 to 12 where the clamp is in the closed position, placing an item into the receiving area, moving the reciprocal saw such that the item pulls the clamp jaw into the open position such that the clamp jaw holds the item, and then cutting the item with the cutting blade.

Without intending to be limited by theory, it is believed that the present invention allows easy, convenient, and intuitive one-handed cutting of an item with a reciprocal saw. By placing the item in the receiving area and then slightly pulling the reciprocal saw away from the item, the clamp jaw opens allowing the item to naturally slip between the clamp jaw and the chassis and adjacent to the cutting blade. This all can be done without needing to use a thumb or other finger to trigger the opening of the clamp jaws. Such a convenient and intuitive manipulated method is easy for the user, even when using the reciprocal saw in a position such as in a tree, or other position where safety is of paramount importance.

### BRIEF DESCRIPTION OF THE DRAWINGS

Fig. 1 shows a partially-cut-away view of an embodiment of the reciprocating saw of the present invention;
Fig. 2 shows a side-view of the reciprocal saw of Fig. 1 in-use;
Fig. 3 shows a side-view of the reciprocal saw of Fig. 1 in-use where the item is ready to be cut;
Fig. 4 shows a side-view of the reciprocal saw of Fig. 1 in-use when the item is partially-cut; and
Fig. 5 shows a front perspective view of an embodiment of a reciprocal saw having a clamp and a second clamp on the opposite side of the cutting blade from the clamp.

The figures herein are for illustrative purposes only and are not necessarily drawn to scale.

### DESCRIPTION OF THE PREFERRED EMBODIMENTS

Unless otherwise specifically provided, all tests herein are conducted at standard conditions which include a room and testing temperature of 25 °C, sea level (1 atm.) pressure, pH 7, and all measurements are made in metric units. Furthermore, all percentages, ratios, etc. herein are by weight of the final object, unless specifically indicated otherwise.

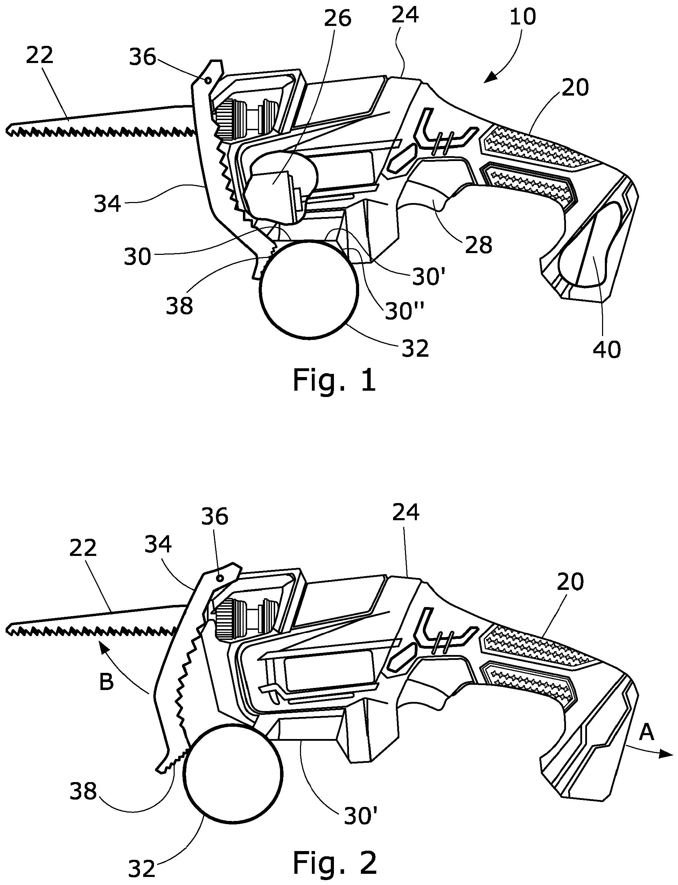

Turning to the Figures, Fig. 1 shows a partially-cut-away side-view of an embodiment of the reciprocating saw, 10, of the present invention. The reciprocating saw, 10, has a handle, 20, and a cutting blade, 22, distal from the handle, 20. The cutting blade, 22, is typically removable and replaceable in case it becomes dull, breaks, etc. Such cutting blades are well-known in the art.

A chassis, 24, is located between the handle, 20, and the cutting blade, 22 and connects them. The chassis, 24, also contains a motor, 26, therein, which is typically an electric motor, although other motors are also useful herein. The motor, 26, drives the cutting blade, 22, in a reciprocating motion. The chassis, 24, also contains a switch, 28, which completes the electrical circuit to turn on the motor, 26.

The chassis, 24, also contains a receiving area, 30, which in this case is an indentation 30', that is sized and shaped to be able to receive an item, 32, intended to be cut by the cutting blade. In Fig. 1, the indentation is a two-sided arrangement having 30' and 30" connected by an obtuse angle. Without intending to be limited by theory, it is believed that this obtuse angle allows the item, 32, to more easily fit into the indentation, 30', and to slide towards the clamp jaw (see 38). The indentation useful herein may be in a variety of configurations determinable to one skilled in the art, for example, a two-sided arrangement as seen in Fig. 1, a curved or rounded indentation, a flat area which slopes towards the clamp jaw, (see 38), ctc.

According to the invention, when in the closed position, the clamp jaw forms part of the indentation, and protrudes from the indentation, as seen in Fig. 1. The indentation is typically a concave area (either angled or smooth) of the chassis immediately adjacent to the clamp jaw, when the clamp jaw is in the closed position.

In an example not according to the invention, the receiving area of the chassis does not have an indentation, but is substantially flat where the clamp jaw meets the chassis. In such a case, as long as the clamp jaw extends at least a little bit; or from about 3 mm to about 50 mm; or from about 5 mm to about 35 mm; or from about 7 mm to about 30 mm from the chassis when the clamp is in the closed position, then it will still catch the item when the item is slid along the receiving area of the chassis towards the clamp jaw. Then the clamp jaw will open to help guide the item into position closer to the cutting blade.

A clamp, 34, has a pivot, 36, and a clamp jaw, 38, distal from the pivot, 26. The clamp typically has a concave design; or a partially-concave design, so that the clamp can capture and hold the item. The pivot, 36, is also distal from the receiving area, 30, and the indentation, 30'. The pivot, 36, connects the clamp, 34, to the chassis, 24, and also allows the clamp, 36, to rotate between an open position and a closed position. When the clamp is in the closed position as seen in Fig. 1, the clamp jaw, 38, is immediately adjacent to the receiving area, 30, and the indentation, 30', in the chassis, 24.

In this embodiment, the clamp, 34, and the clamp jaw, 38, are serrated so as to better grip the item, 32. The serrations reduce the likelihood that the item will slip and/or rotate during placement and cutting. However, in an embodiment herein the clamp and/or the clamp jaw is not serrated, and may have a smooth, and/or rough texture.

In the invention herein, the item, 32, need not be completely received within the indentation, 30' and 30", as shown in Fig. 1. Instead, the reciprocating saw, 10, herein is intended to cut both small items which may fully be received (and/or whose diameters may be fully received) within the indentation, 30' and 30", as well as larger items which may only partially be received within the indentation, 30' and 30". Furthermore, when designing the reciprocal saw herein, the artisan may be expected to adjust the size, arrangement, angle(s), concavity, and/or orientation of the receiving area, the indentation, the chassis, the clamp and/or the clamp jaw as desired so as to receive any desired size of item for cutting. In an embodiment herein, the reciprocal saw; or the chassis and the clamp; or the receiving area; or the indentation, the clamp and the clamp jaw; are designs such that an item having a diameter of from about 0.5 mm to about 120 mm; or from about 1 mm to about 100 mm; or from about 1.5 mm to about 90 mm may be received within the indentation. As used herein, the phrase "received within the receiving area" indicates that the item simultaneously touches the receiving area as well as the clamp jaw. As used herein, the phrase "received within the indentation" indicates that the item simultaneously touches at least a portion of the indentation as well as the clamp jaw.

The item, 32, herein may be made of a material selected from, for example, wood, plastic, metal, concrete, or a mixture thereof; or wood, plastic, metal and a mixture thereof. In an embodiment of the method herein, the item is selected from a branch, a pipe, a stick, and a combination thereof.

In the embodiment in Fig. 1, the motor, 26, is an electric motor, and it is operatively-connected to a battery, 40, located at the end of the handle, 20, so as to counter-balance the reciprocal saw, 10. The battery, 40, may be removable, replaceable, and/or rechargeable as desired.

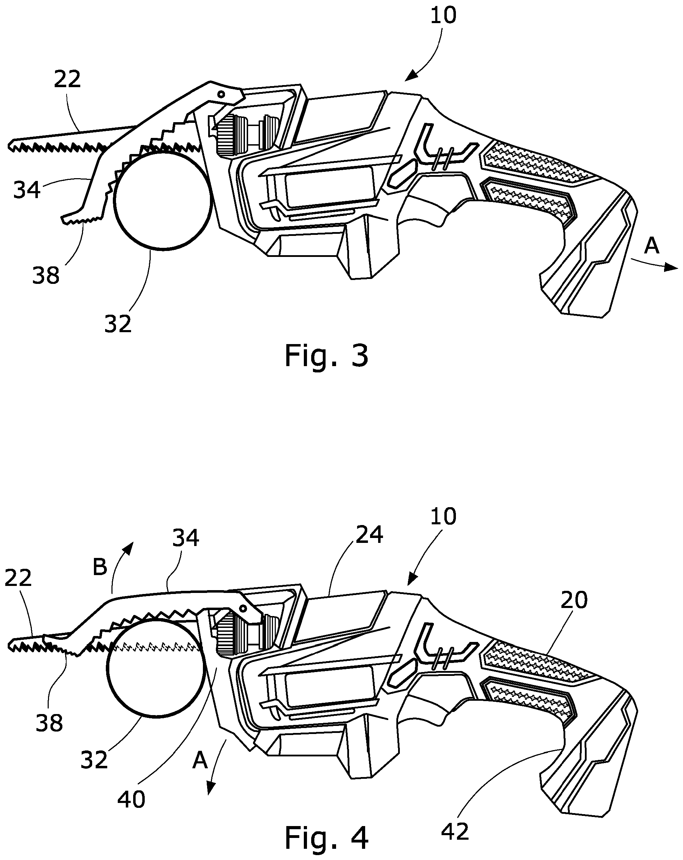

Fig. 2 shows a side-view of the reciprocal saw, 10, of Fig. 1, in-use. Starting from the position in Fig. 1, when the item, 32, is received within the indentation, 30', the user holds the handle, 20, and pulls the reciprocal saw, 10, in the direction of arrow A, then the item, 32, will push against the clamp jaw, 38, and cause the clamp, 34, to move from the closed position of Fig. 1 into the open positions seen in Fig. 2 and Fig. 3. In Fig. 2 this open position is a partially-open position. In the open position, the clamp jaw, 38, is no longer immediately adjacent to the indentation, 30', as the item, 32, is now forcing the clamp , 34, to open and move in the direction of arrow B. This causes the clamp, 34, to open by rotating about the pivot, 36. This brings the item, 32, closer to the cutting blade, 22, and as the clamp, 34, is biased to the closed position, the clamp, 34, holds the item, 32, as it advances towards the cutting blade, 22. The clamp may contain, for example, an internal spring (not shown) to bias the clamp closed.

Alternatively, the clamp may push against a resilient piece (not shown) so as to bias the clamp closed. Other methods of biasing the clamp closed are known in the art and easily conceivable by the artisan when designing the reciprocal saw.

Fig. 3 shows a side-view of the reciprocal saw, 10, of Fig. 1 in-use where the item, 32, is ready to be cut. By continuing to pull the reciprocal saw, 10, away from the item, 32, in the direction of arrow A, the item, 32, has naturally moved into a position for cutting as the clamp, 34, continues to move in the direction of arrow B. The clamp, 34, is in the open position and the item, 32, is touching the clamp, 34, the chassis, 24, and the cutting blade, 22. The item, 32, is securely held by the clamp, 34, and is ready to be cut. The clamp, 34, holds the item to prevent shaking and other movement, and in the case of a round item, 32, such as a branch, pipe, dowel, etc. to prevent and/or reduce the rotation of the item, 32, as it is being cut by the cutting blade, 22.

Fig. 4 shows a side-view of the reciprocal saw, 10, of Fig. 1 in-use when the item, 32, is partially-cut. The cutting blade, 22, is partially-through the item, and as the user holds the reciprocating saw by the handle, 20, and pushes it down along the direction of arrow A, the cutting blade, 22, will dig deeper and deeper into the item, 32, until it is cut though.

Fig. 4 also shows a clamp holder, 40, which affixes the clamp, 34, to the chassis, 24.

When in use, the clamp, 34, holds the item, 32, against the clamp holder, 40, securely to prevent slippage.

In the embodiment of Fig. 4, a hook, 42, is formed by the handle, 20, such that the reciprocal saw, 10, may be securely hung on a branch, a peg, knob, hanger, etc. when not in use.

This hook contains a concave-curve in the handle and thus the centre of gravity will be immediately below the hook when it is hung. Such a hook is a preferred feature, not a required feature.

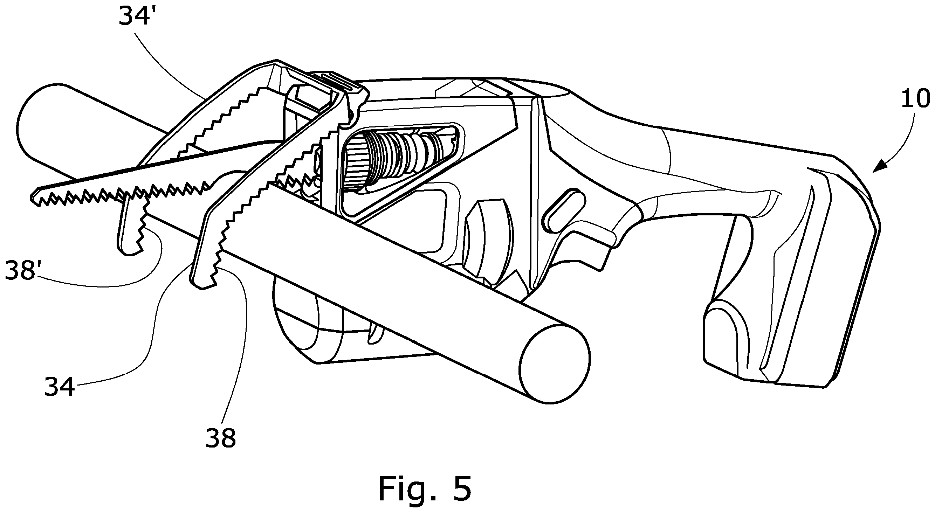

Fig. 5 shows a front perspective view of an embodiment of a reciprocal saw, 10, having a clamp, 34, and a second clamp, 34', on the opposite side of the cutting blade, 22, from the clamp, 34. In such a case, the second clamp will often be a mirror image of the clamp, as seen in Fig. 5 , and with reference to the plane of the cutting blade, 22. The clamp, 34, and the second clamp, 34' both, respectively, contain a clamp jaw, 38, and a second clamp jaw, 38'.

In an embodiment herein, the clamp is permanently-fixed on the chassis. When the clamp is not needed, and/or when cutting an item which is too large for the clamp and/or indentation, then the clamp will remain in the closed position, and the clamp and indentation may thus be ignored. The user may therefore employ the reciprocating saw in the saw way as any other reciprocating saw.

In an embodiment herein, the clamp, and/or the clamp holder is removable from the chassis. In such an embodiment, when the clamp is not needed, it may be removed by, for example, sliding it off of the chassis. In such an embodiment, there may be some type of fastener, such as a rail, a screw, button, clip, lock, or a combination thereof which secures the clamp to the chassis.

The various components and parts of the reciprocal saw herein may be made from materials known in the art, such as plastic, metal, resin, rubber, etc.

### METHOD OF USE

The reciprocal saw herein is intended to hold and/or cut an item, preferably in a secure fashion so as to minimize the potential for injury, incorrect cuts, and such.

According to another aspect of the invention, a method is provided wherein a reciprocal saw as described herein is provided, with the clamp in the closed position. An item is received in the receiving area; or the indentation, and the reciprocal saw is moved such that the item contacts the clamp jaw and pulls the clamp into the open position. Typically, when the reciprocal saw is moved in a direction away from the item, the clamp will rotate about the pivot and thereby pull the clamp into the open position. The clamp holds the item; or the clamp holds the item next to the cutting blade (see Fig. 3). The item will typically be contacting the clamp, the cutting blade, and the chassis at this point. If a clamp holder is present, then the item may be contacting the clamp holder in addition to, or instead of contacting the chassis.

According to a further aspect of the invention, a method is provided wherein a reciprocal saw as described herein is provided, with the clamp in the closed position. An item is received in the receiving area; or the indentation, and the reciprocal saw is moved such that the item contacts the clamp jaw and pulls the clamp into the open position. Typically, when the reciprocal saw is moved in a direction away from the item, the clamp will rotate about the pivot and thereby pull the clamp into the open position. The clamp holds the item; or the clamp holds the item next to the cutting blade (see Fig. 3). The item will typically be contacting the clamp, the cutting blade, and the chassis at this point. If a clamp holder is present, then the item may be contacting the clamp holder in addition to, or instead of contacting the chassis. The item is then cut with the cutting blade.

It should be understood that the above only illustrates and describes examples whereby the present invention may be carried out, and that modifications and/or alterations may be made thereto within the scope of the claims.

## Claims

1. A reciprocal saw (10) for cutting an item (32) comprising:
a. a handle (20);
b. a cutting blade (22) distal from the handle (20);
c. a chassis (24) between the handle (20) and the cutting blade (22), wherein the chassis (24) comprises a receiving area (30) thereupon, wherein the receiving area (30) may receive the item (32),
d. a clamp (34) attached to the chassis (24) proximal to the cutting blade (22), the clamp (34) having an open position and a closed position, wherein the clamp (34) has a pivot (36) and a clamp jaw (38) distal from the pivot (36),
**characterized in that** the receiving area (30) is an indentation (30') in the chassis (24), wherein in the closed position the clamp jaw (38) is immediately adjacent to the receiving area (30), forms part of the indentation, and protrudes from the indentation (30'), wherein in the open position
the clamp jaw (38) is not immediately adjacent to the receiving area (30), and wherein, when the reciprocal saw (10) is moved, the item (32) may be held by the clamp (34).

2. The reciprocal saw (10) according to Claim 1, wherein, when the item (32) is received within the indentation (30') and when the handle (20) is moved in a direction away from the item (32), then the item (32) pulls the clamp jaw (38) into the open position and the clamp jaw (38) then holds the item (32); optionally wherein the clamp jaw (38) holds the item (32) against the chassis (24);
optionally wherein the chassis (24) further comprises a clamp holder for affixing the clamp (34) to the chassis (24), wherein the clamp jaw (38) holds the item (32) against the clamp holder.

3. The reciprocal saw (10) according to any of the preceding claims, wherein the item (32) is a wooden item (32); optionally wherein the wooden item (32) is selected from the group consisting of a branch, a pipe, a stick, and a combination thereof.

4. The reciprocal saw (10) according to any of the preceding claims, wherein the clamp jaw (38) holds the item (32) as it is being cut by the cutting blade (22).

5. The reciprocal saw (10) according to any of the preceding claims, wherein the clamp (34) is biased to the closed position.

6. The reciprocal saw (10) according to any of the preceding claims, wherein the clamp (34) is permanently-fixed on the chassis (24).

7. The reciprocal saw (10) according to one of claims 1 to 5, wherein the clamp (34) is removable from the chassis (24).

8. The reciprocal saw (10) according to any of the preceding claims, wherein, when the clamp (34) is in the closed position, the clamp jaw (38) forms part of the receiving area (30).

9. The reciprocal saw (10) according to any of the preceding claims, further comprising a motor for driving the cutting blade (22), and wherein the motor is located within the chassis (24); optionally wherein the motor is an electric motor and wherein the reciprocal saw (10) comprises a battery operatively-connected to the electric motor.

10. The reciprocal saw (10) according to any of the preceding claims, wherein the pivot (36) is distal from the indentation (30').

11. The reciprocal saw (10) according to any of the preceding claims, further comprising a second clamp (34) on the opposite side of the cutting blade (22) from the clamp (34); optionally wherein the second clamp jaw is a mirror-image of the clamp jaw (38).

12. The reciprocal saw (10) according to any of the preceding claims, wherein the handle (20) further comprises a hook.

13. A method for holding an item (32) comprising the steps of:
a. providing a reciprocal saw (10) according to any of the preceding claims, wherein the clamp (34) is in the closed position;
b. receiving an item (32) in the receiving area; and
c. moving the reciprocal saw (10) such that the handle (20) is moved in a direction
away from the item (32), such that the item (32) contacts the clamp jaw (38) and pulls the clamp (34) into the open position and the clamp (34) then holds the item (32).

14. A method for cutting an item (32) comprising the steps of:
a. providing a reciprocal saw (10) according to any of the claims 1 to 12, wherein the clamp (34) is in the closed position;
b. receiving an item (32) into the receiving area (30);
c. moving the reciprocal saw (10) such that the handle (20) is moved in a direction away from the item (32), such that the item (32) contacts the clamp jaw (38) and pulls the clamp (34) into the open position and the clamp (34) then holds the item (32); and
d. cutting the item (32) with the cutting blade (22).

15. The method according to either one of Claims 13 or 14, further rotating the clamp (34) about the pivot (36), when reciprocal saw (10) is moved in a direction away from the item (32) so as to rotate the and to thereby pull the clamp (34) into the open position.

## Patentansprüche

1. Stichsäge (10) zum Schneiden eines Gegenstands (32), umfassend:
a. einen Griff (20);
b. eine Schneidklinge (22) distal vom Griff (20);
c. ein Chassis (24) zwischen dem Griff (20) und der Schneidklinge (22), wobei das Chassis (24) einen Aufnahmebereich (30) darauf umfasst, wobei der Aufnahmebereich (30) den Gegenstand (32) aufnehmen kann,
d. eine Klemme (34), die an dem Chassis (24) nahe zu der Schneidklinge (22) angebracht ist, wobei die Klemme (34) eine offene Position und eine geschlossene Position aufweist, wobei die Klemme (34) einen Drehpunkt (36) und eine Klemmbacke (38) distal von dem Drehpunkt (36) aufweist,
**dadurch gekennzeichnet, dass** der Aufnahmebereich (30) eine Vertiefung (30') in dem Chassis (24) ist, wobei in der geschlossenen Position die Klemmbacke (38) unmittelbar an den Aufnahmebereich (30) angrenzt, einen Teil der Vertiefung bildet,
und aus der Vertiefung (30') herausragt, wobei in der offenen Position die Klemmbacke (38) nicht unmittelbar an den Aufnahmebereich (30) angrenzt, und wobei, wenn die Stichsäge (10) bewegt wird, der Gegenstand (32) von der Klemme (34) gehalten werden kann.

2. Stichsäge (10) nach Anspruch 1, wobei, wenn der Gegenstand (32) in der Vertiefung (30') aufgenommen wird und wenn der Griff (20) in einer Richtung weg von dem Gegenstand (32) bewegt wird, der Gegenstand (32) dann die Klemmbacke (38) in die offene Position zieht und die Klemmbacke (38) dann den Gegenstand (32) hält; wobei optional die Klemmbacke (38) den Gegenstand (32) gegen das Chassis (24) hält;
wobei optional das Chassis (24) ferner einen Klemmhalter zum Fixieren der Klemme (34) an dem Chassis (24) umfasst, wobei die Klemmbacke (38) den Gegenstand (32) gegen den Klemmhalter hält.

3. Stichsäge (10) nach einem der vorstehenden Ansprüche, wobei der Gegenstand (32) ein Holzgegenstand (32) ist; wobei optional der Holzgegenstand (32) ausgewählt ist aus der Gruppe bestehend aus einem Zweig, einem Stamm, einem Stab und einer Kombination davon.

4. Stichsäge (10) nach einem der vorstehenden Ansprüche, wobei die Klemmbacke (38) den Gegenstand (32) hält, während er durch die Schneidklinge (22) geschnitten wird.

5. Stichsäge (10) nach einem der vorstehenden Ansprüche, wobei die Klemme (34) zu der geschlossenen Position vorgespannt ist.

6. Stichsäge (10) nach einem der vorstehenden Ansprüche, wobei die Klemme (34) dauerhaft an dem Chassis (24) befestigt ist.

7. Stichsäge (10) nach einem der Ansprüche 1 bis 5, wobei die Klemme (34) von dem Chassis (24) lösbar ist.

8. Stichsäge (10) nach einem der vorstehenden Ansprüche, wobei, wenn sich die Klemme (34) in der geschlossenen Position befindet, die Klemmbacke (38) einen Teil des Aufnahmebereichs (30) bildet.

9. Stichsäge (10) nach einem der vorstehenden Ansprüche, ferner umfassend einen Motor zum Antreiben der Schneidklinge (22), und wobei sich der Motor innerhalb des Chassis (24) befindet; wobei der Motor optional ein Elektromotor ist und wobei die Stichsäge (10) eine Batterie umfasst, die betriebsfähig mit dem Elektromotor verbunden ist.

10. Stichsäge (10) nach einem der vorstehenden Ansprüche, wobei der Drehpunkt (36) distal von der Vertiefung (30') ist.

11. Stichsäge (10) nach einem der vorstehenden Ansprüche, ferner umfassend eine zweite Klemme (34) auf der der Klemme (34) gegenüberliegenden Seite der Schneidklinge (22); wobei die zweite Klemmbacke optional ein Spiegelbild der Klemmbacke (38) ist.

12. Stichsäge (10) nach einem der vorstehenden Ansprüche, wobei der Griff (20) ferner einen Haken umfasst.

13. Verfahren zum Halten eines Gegenstands (32), umfassend die folgenden Schritte:
a. Bereitstellen einer Stichsäge (10) nach einem der vorstehenden Ansprüche, wobei sich die Klemme (34) in der geschlossenen Position befindet;
b. Aufnehmen eines Gegenstands (32) in dem Aufnahmebereich; und
c. Bewegen der Stichsäge (10), so dass der Griff (20) in einer Richtung weg von dem Gegenstand (32) bewegt wird, so dass der Gegenstand (32) die Klemmbacke (38) berührt und die Klemme (34) in die offene Position zieht und die Klemme (34) dann den Gegenstand (32) hält.

14. Verfahren zum Schneiden eines Gegenstands (32), umfassend die folgenden Schritte:
a. Bereitstellen einer Stichsäge (10) nach einem der Ansprüche 1 bis 12, wobei sich die Klemme (34) in der geschlossenen Position befindet;
b. Aufnehmen eines Gegenstands (32) in dem Aufnahmebereich (30);
c. Bewegen der Stichsäge (10), sodass der Griff (20) in einer Richtung weg von dem Gegenstand (32) bewegt wird, sodass der Gegenstand (32) die Klemmbacke (38) berührt und die Klemme (34) in die offene Position zieht und die Klemme (34) dann den Gegenstand (32) hält; und
d. Schneiden des Gegenstands (32) mit der Schneidklinge (22).

15. Verfahren nach einem der Ansprüche 13 oder 14, wobei ferner die Klemme (34) um den Drehpunkt (36) gedreht wird, wenn die Stichsäge (10) in einer Richtung weg von dem Gegenstand (32) bewegt wird, um die Klemme (34) zu drehen und sie dadurch in die offene Position zu ziehen.

## Revendications

1. Scie alternative (10) pour couper une pièce (32) comprenant :
a. une poignée (20) ;
b. une lame de coupe (22) à distance de la poignée (20) ;
c. un châssis (24) entre la poignée (20) et la lame de coupe (22), le châssis (24) comprenant une zone de réception (30) sur celui-ci, la zone de réception (30) pouvant recevoir la pièce (32),
d. une pince (34) fixée au châssis (24) à proximité de la lame de coupe (22), la pince (34) ayant une position ouverte et une position fermée, la pince (34) ayant un pivot (36) et une mâchoire de pince (38) à distance du pivot (36),
**caractérisée en ce que** la zone de réception (30) est un renfoncement (30') dans le châssis (24), dans laquelle en position fermée la mâchoire de pince (38) est immédiatement adjacente à la zone de réception (30), fait partie du renfoncement,
et dépasse du renfoncement (30'), dans laquelle en position ouverte, la mâchoire de pince (38) n'est pas immédiatement adjacente à la zone de réception (30), et dans laquelle, lorsque la scie alternative (10) est déplacée, la pièce (32) peut être maintenue par la pince (34).

2. Scie alternative (10) selon la revendication 1, dans laquelle, lorsque la pièce (32) est reçue à l'intérieur du renfoncement (30') et lorsque la poignée (20) est déplacée dans une direction s'éloignant de la pièce (32), alors la pièce (32) tire la mâchoire de pince (38) vers la position ouverte et la mâchoire de pince (38) maintient alors la pièce (32) ; la mâchoire de pince (38) maintenant éventuellement la pièce (32) contre le châssis (24) ;
le châssis (24) comprenant éventuellement en outre un porte-pince pour fixer la pince (34) au châssis (24), la mâchoire de pince (38) maintenant la pièce (32) contre le porte-pince.

3. Scie alternative (10) selon l'une quelconque des revendications précédentes, dans laquelle la pièce (32) est une pièce de bois (32) ; dans laquelle la pièce de bois (32) est éventuellement choisie dans le groupe constitué par une branche, un tuyau, un bâton, et une combinaison de ceux-ci.

4. Scie alternative (10) selon l'une quelconque des revendications précédentes, dans laquelle la mâchoire de pince (38) maintient la pièce (32) pendant qu'elle est coupée par la lame de coupe (22).

5. Scie alternative (10) selon l'une quelconque des revendications précédentes, dans laquelle la pince (34) est sollicitée vers la position fermée.

6. Scie alternative (10) selon l'une quelconque des revendications précédentes, dans laquelle la pince (34) est fixée de manière permanente sur le châssis (24).

7. Scie alternative (10) selon l'une des revendications 1 à 5, dans laquelle la pince (34) peut être retirée du châssis (24).

8. Scie alternative (10) selon l'une quelconque des revendications précédentes, dans laquelle, lorsque la pince (34) est dans la position fermée, la mâchoire de pince (38) fait partie de la zone de réception (30).

9. Scie alternative (10) selon l'une quelconque des revendications précédentes, comprenant en outre un moteur pour entraîner la lame de coupe (22), et le moteur étant situé à l'intérieur du châssis (24) ; éventuellement le moteur étant un moteur électrique et la scie alternative (10) comprenant une batterie fonctionnellement reliée au moteur électrique.

10. Scie alternative (10) selon l'une quelconque des revendications précédentes, dans laquelle le pivot (36) est à distance du renfoncement (30').

11. Scie alternative (10) selon l'une quelconque des revendications précédentes, comprenant en outre une seconde pince (34) sur le côté opposé de la lame de coupe (22) par rapport à la pince (34) ; éventuellement dans laquelle la seconde mâchoire de pince est une image spéculaire de la mâchoire de pince (38).

12. Scie alternative (10) selon l'une quelconque des revendications précédentes, dans laquelle la poignée (20) comprend en outre un crochet.

13. Procédé pour maintenir une pièce (32) comprenant les étapes consistant à :
a. fournir une scie alternative (10) selon l'une quelconque des revendications précédentes, la pince (34) étant dans la position fermée ;
b. recevoir une pièce (32) dans la zone de réception ; et
c. déplacer la scie alternative (10) de telle sorte que la poignée (20) est déplacée dans une direction s'éloignant de la pièce (32), de telle sorte que la pièce (32) vient en contact avec la mâchoire de pince (38) et tire la pince (34) vers la position ouverte et la pince (34) maintient ensuite la pièce (32).

14. Procédé pour couper une pièce (32) comprenant les étapes consistant à :
a. fournir une scie alternative (10) selon l'une quelconque des revendications 1 à 12, la pince (34) étant dans la position fermée ;
b. recevoir une pièce (32) dans la zone de réception (30) ;
c. déplacer la scie alternative (10) de telle sorte que la poignée (20) est déplacée dans une direction s'éloignant de la pièce (32), de telle sorte que la pièce (32) vient en contact avec la mâchoire de pince (38) et tire la pince (34) vers la position ouverte et la pince (34) maintient ensuite la pièce (32) ; et
d. couper la pièce (32) avec la lame de coupe (22).

15. Procédé selon l'une ou l'autre des revendications 13 ou 14, faisant en outre tourner la pince (34) autour du pivot (36), lorsque la scie alternative (10) est déplacée dans une direction s'éloignant de la pièce (32) de manière à faire tourner la pince (34) et à la tirer ainsi vers la position ouverte.
